# EUROPEAN PATENT APPLICATION

(11) **EP 4 801 041 A1**
(43) Date of publication of application: **02.09.2026**
(21) Application number: 25161108.3
(22) Date of filing: 28.02.2025
(51) Int. Cl.: H04N 21/2187, H04N 21/2343, H04N 21/262, H04N 21/472, H04N 21/6587, H04N 21/81, H04N 21/845

(54) **INTERACTIVE VIDEO STREAMING SYSTEM AND METHOD**

(71) Applicant: Tivio Studio a.s., 186 00 Prague (CZ)
(72) Inventor: NAVRATIL, Ladislav, 14300 PRAGUE (CZ)
(74) Representative: Plasseraud IP

(57) **Abstract**

An interactive video streaming system and method for IPTV and OTT platforms addresses the technical problem of integrating interactive features directly into video streams, overcoming the limitations of current fragmented solutions. The described method involves receiving a request from a video player for a video stream encoded according to an HTTP-based adaptive bitrate streaming protocol, redirecting the request to a stream generator to create a distinct streaming session by generating a specific URL, and providing the user's session video stream. The method further includes altering the stream based on user requests by generating a manifest file with altered stream segments from multiple input sources. This system enhances user engagement by allowing real-time modifications to the video stream, enabling personalized and immersive viewing experiences. The primary use is in delivering a seamless, platform-agnostic interactive experience without requiring additional front-end applications, thereby simplifying deployment and enhancing user satisfaction.

## Description

### Technical Field

This disclosure pertains to the field of interactive video streaming technologies, specifically to systems and methods for integrating interactive features directly into video streams for IPTV and OTT platforms.

### Background Art

IPTV (Internet Protocol Television) and OTT (Over-The-Top) platforms are two distinct methods of delivering video content to viewers over the internet, bypassing traditional cable or satellite television services.

IPTV (Internet Protocol Television) delivers television content using Internet Protocol (IP) networks, allowing for the streaming of live TV channels and on-demand video content. It is typically provided by telecom companies and requires a set-top box or a compatible device to decode the IP signals. IPTV services are often bundled with internet and telephone services, providing a comprehensive package to consumers. IPTV is known for its ability to offer a wide range of channels, interactive features, and high-quality video streaming.

OTT (Over-The-Top) platforms deliver video content directly to viewers over the internet, without the need for a traditional cable or satellite TV subscription. These platforms include popular services like Netflix^{®}, Hulu^{®}, Amazon Prime Video^{®}, and Disney+^{®}. OTT content can be accessed on a variety of devices, including smart TVs, smartphones, tablets, and computers. OTT services are known for their flexibility, allowing users to watch content on-demand.

Both IPTV and OTT platforms have transformed the way viewers consume video content, offering greater flexibility, interactivity, and personalization compared to traditional broadcasting methods.

However, despite their widespread adoption, these platforms often lack the ability to provide truly interactive experiences. Current solutions typically require separate integrations for each device or platform, leading to increased complexity and cost. This fragmentation limits the scalability and reach of interactive features, as each platform demands distinct development efforts.

Moreover, existing systems often limit interactive capabilities to specific environments, making it challenging to offer a seamless, engaging experience across diverse devices. There is a clear demand for a streamlined approach that integrates interactivity directly into the video stream. Such a solution would simplify deployment and enhance user engagement by providing immediate access to interactive features without requiring additional front-end applications. This gap in the current technology landscape highlights the demand for an innovative approach that can deliver a unified, platform-agnostic interactive experience.

### Summary

This disclosure improves the situation.

It is proposed a method for interactive video streaming comprising:
a. receiving a request from a video player for a video stream encoded according to an HTTP-based adaptive bitrate streaming protocol;
b. redirecting the request to a stream generator to create a unique streaming session for a user by generating a unique URL for said user's streaming session;
c. providing the user's session video stream;
d. receiving a request for altering the user's session video stream;
e. altering said user's session video stream based on the received request, by generating on-the-fly a manifest file comprising altered stream segments chosen among a plurality of input sources;
f. providing an altered user's session video stream based on the generated manifest file.

In another aspect, it is proposed a system for interactive video streaming, comprising:
a. a video player configured to request a manifest for a video stream encoded according to an HTTP-based adaptive bitrate streaming protocol;
b. a Content Delivery Network, CDN, edge on-the-fly stream generator configured to create a unique streaming session for a user by redirecting the manifest request to a unique URL generated for the user's session;
c. a user umbrella stream management module configured to manage the user's session video stream and alter the stream based on received requests, by generating on-the-fly a manifest file comprising altered stream segments;
d. a plurality of input sources configured to provide content for the user's session video stream.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

The following features, can be optionally implemented, separately or in combination one with the others:

The altered user's session video stream is provided as a live video stream.

The request for altering the user's session video stream is generated by a remote controller application in response to a user command belonging to the group comprising:
- a command for switching an angle of view of the user's session video stream;
- a command for viewing a replay of the user's session video stream;
- a command for switching an audio or video content of the user's session video stream;
- a command for making a purchase;
- a command for user interaction with said user's session video stream..

Thus, user interactivity and engagement is enhanced by allowing real-time modifications to the video stream based on user commands. This capability enables a more personalized and immersive viewing experience, as users can dynamically switch between different content options, such as camera angles or audio tracks, without interrupting the streaming session. The user may also interact with the content, for example with an advertisement in the stream or to answer pools or quizzes.

The request for altering the user's session video stream is automatically generated by a remote controller application based on at least one criterion belonging to the group comprising:
- a personalization criterion based on a recommendation algorithm for the user;
- an ad targeting criterion for the user;
- a criterion for generating interaction with the user;
- a subscription status check for the user;
- a duration criterion;
- a content event criterion.

Thus, the claimed method allows for the provision of a highly personalized and adaptive streaming experience. Indeed, it allows for the automatic adjustment of content delivery in response to user-specific data, such as personalization algorithms, ad targeting, or subscription status. By automating these interactions, the system can dynamically tailor the content to match user preferences and behaviors without manual intervention, enhancing user satisfaction and engagement. The request may also be generated as a response to a content event, such as a highlight appearing in the viewed content or some post from a social network.

Providing an altered user's session video stream comprises providing a looping content for initiating a pairing process with a user's device.

Indeed, broadcasters may lock or restrict content at any point in the stream, e.g. to enforce subscription paid access. The public stream may be closed after a certain period and replaced with an animation prompting the user to pair their device. This animation, which is part of the streaming, loops until the user completes the pairing process, so that payment by the user is part of the active streaming session.

The pairing process comprises:
a. temporarily assigning a pairing identifier to the user's streaming session and displaying the pairing identifier on a pairing screen;
b. receiving the assigned pairing identifier from the user's device;
c. loading a remote control interface on the user's device and authenticating said user through the remote control interface based on a user identifier;
d. activating the user's streaming session using the pairing identifier and the user identifier;
e. releasing the pairing identifier assigned to the user's streaming session.

A secure, efficient, and user-friendly method for authenticating and activating a user's streaming session is hence provided. By efficiently managing the pairing and authentication process, the method minimizes downtime and ensures that users can quickly and easily access their personalized streaming sessions. This approach not only enhances user satisfaction and engagement but also optimizes resource usage by releasing the pairing identifier once the session is activated, allowing it to be reused for other users.

The pairing identifier is embedded in a QR code temporarily assigned to the user's streaming session and the user's device scans said QR code displayed on the pairing screen.

The use of a QR code enhances security by ensuring that the pairing identifier is only accessible to the intended user, while also expediting the authentication process. Once the QR code is scanned, the remote control interface is loaded on the user's device, allowing for seamless authentication and activation of the streaming session. This method supports a wide range of devices and platforms, as QR codes are universally compatible, thereby increasing the system's versatility and reach. In addition, using a QR code eliminates the need for manual input, reducing the potential for errors and streamlining the user experience.

Generating on-the-fly the manifest file comprises synchronizing audio and video tracks issued from the plurality of input sources within each segment to ensure audio and video segment alignment.

This method ensures that audio and video tracks are perfectly aligned within each segment, providing a seamless and coherent viewing experience for the user. By maintaining precise synchronization, the system prevents issues such as audio lag or desynchronization, which can disrupt the viewing experience and reduce user satisfaction. Additionally, this approach allows for the dynamic integration of content from various sources without compromising the quality of the stream. It supports the seamless transition between different content segments, enabling features such as real-time content switching and personalized content delivery

The segments in the manifest file have a short segment duration, preferentially of around two seconds.

By utilizing short segment durations, typically around two seconds, the system can achieve low-latency streaming, which is crucial for providing a near real-time viewing experience. This reduction in latency allows for quicker adaptation to changes in network conditions and user interactions, such as switching between different content options or responding to user commands.

Furthermore, short segment durations facilitate smoother transitions between content segments, minimizing buffering and ensuring a continuous playback experience. This is particularly beneficial in scenarios where dynamic content switching is required, such as during live events or when delivering personalized content. The improved responsiveness and reduced interaction delay enhance user satisfaction and engagement, as users experience minimal interruptions and can interact with the content more fluidly.

The segments in the manifest file are extracted from input sources encoded using identical encoding setups, comprising codec settings, resolution and bitrate parameters.

By ensuring that all input sources are encoded with identical codec settings, resolution, and bitrate parameters, the system can provide seamless transitions between different content segments. This uniformity in encoding prevents visual and auditory discrepancies that could disrupt the viewing experience, such as changes in video quality or audio levels when switching between segments.

Moreover, this approach simplifies the process of segment integration and synchronization, as the system does not need to perform complex adjustments to align segments from different sources. This consistency in encoding also facilitates efficient resource management, as the system can predictably handle data processing and transmission without the need for additional computational overhead to reconcile differences in encoding setups.

### Brief Description of Drawings

Other features, details and advantages will be shown in the following detailed description and on the figures, on which:
Fig. 1

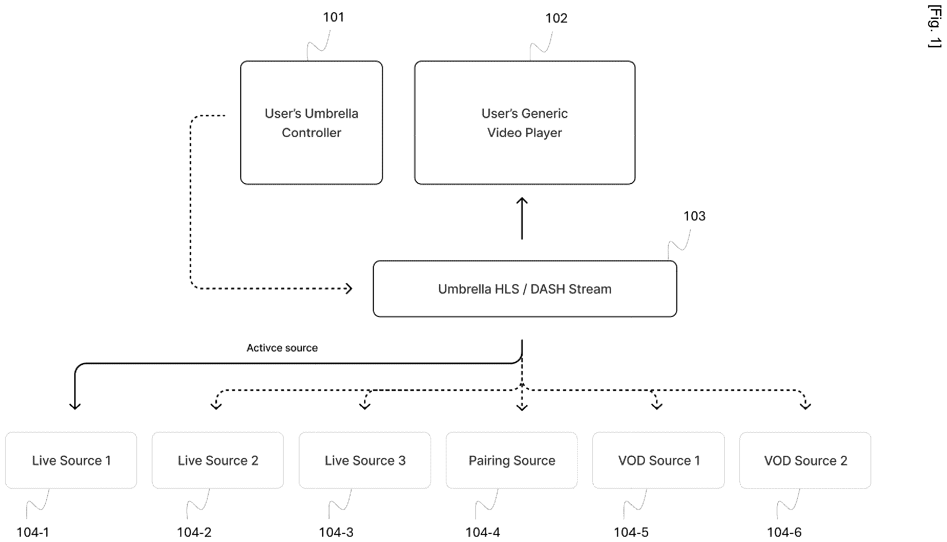

   [Fig. 1] schematically illustrates the technical concept of umbrella streaming according to an embodiment.
Fig. 2

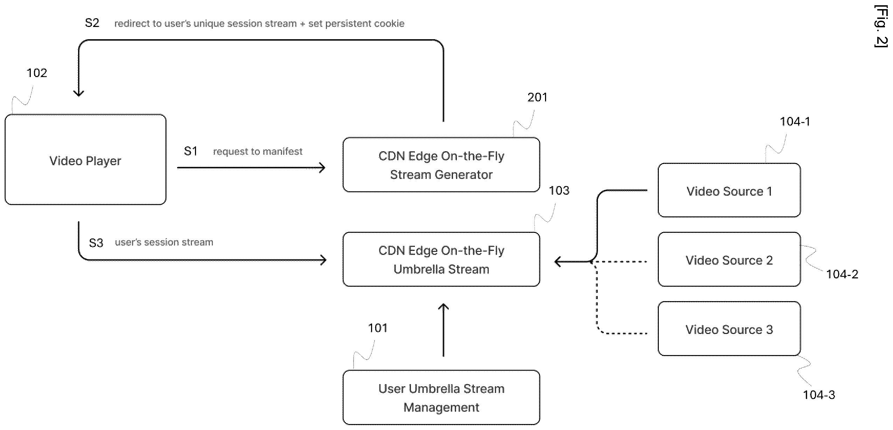

   [Fig. 2] is a flowchart showing session generation according to an embodiment.
Fig. 3

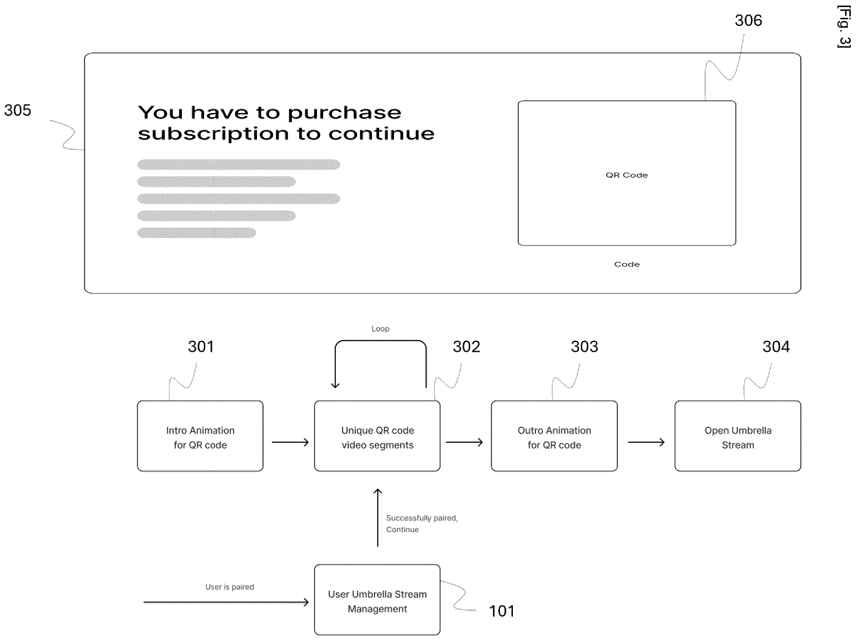

   [Fig. 3] provides an example of a looping animation for an unpaired stream according to an embodiment.
**Fig. 4**

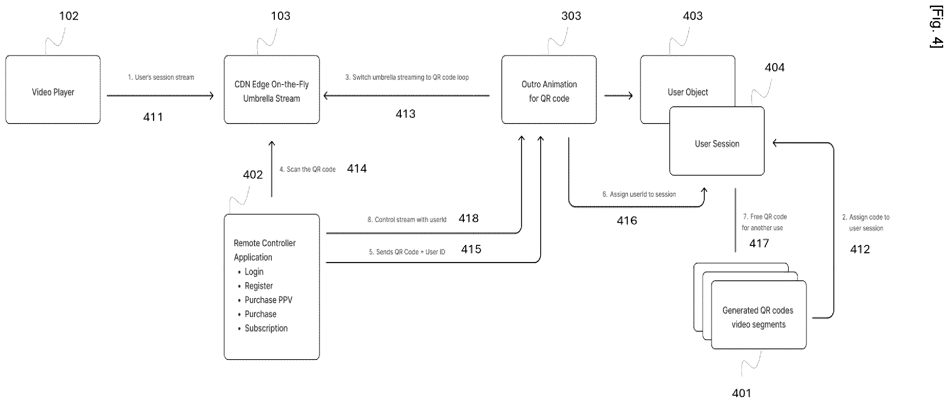

   [Fig. 4] is a flowchart showing a pairing process according to an embodiment.

### Description of Embodiments

The described solution provides an innovative approach to integrating interactive features directly into the video stream for IPTV and OTT platforms, making it platform-agnostic and eliminating the need for specialized front-end applications. Unlike traditional methods that require separate integrations for each device or platform, this technology allows for immediate access to interactive features such as ad injection, one-click payments, and personalized content recommendations through a classic video player.

This is achieved through the concept of Umbrella Streaming, which dynamically alters a single live video stream based on user commands or automated triggers, utilizing HLS (HTTP Live Streaming) or DASH (Dynamic Adaptive Streaming over HTTP) manifests generated on-the-fly. The system's ability to provide a seamless, interactive viewing experience without requiring integration with any video player, combined with its use of a REST API for managing user interactions, distinguishes it from existing adaptive bitrate streaming technologies that primarily focus on optimizing media quality based on network conditions. This technology not only simplifies deployment across various platforms but also enhances monetization opportunities by embedding intelligence into the video feed itself, offering a groundbreaking solution in the competitive landscape of live television broadcasting.

It is recalled that HLS (HTTP Live Streaming) and DASH (Dynamic Adaptive Streaming over HTTP) are adaptive bitrate streaming protocols that enable the delivery of high-quality video content over the internet. HLS, developed by Apple^{®}, segments video content into small chunks and delivers them over HTTP, allowing the client to adaptively switch between different quality levels based on network conditions. DASH, an international standard defined by the Moving Picture Experts Group (MPEG) and published as ISO/IEC 23009-1:2012, operates similarly by breaking down video into segments and using a manifest file to describe available quality levels. Both protocols are designed to provide a seamless viewing experience by dynamically adjusting the video quality to match the user's bandwidth and device capabilities, thereby minimizing buffering and ensuring smooth playback across various network conditions.

It is also recalled that a manifest file in video streaming, particularly for protocols like HLS and DASH, serves as a guide for delivering video content. It includes:
- Content Description: Lists URLs and durations of video segments, guiding the video player on how to retrieve and play them.
- Adaptive Bitrate Streaming: Details multiple quality levels (bitrates, resolutions) of the video, allowing the player to switch dynamically based on network conditions.
- Segment Information: Provides metadata for each segment, such as duration and sequence number, aiding in efficient playback and buffering.
- Synchronization: Ensures audio and video tracks are aligned, offering a seamless viewing experience.
- Dynamic Updates: In live streaming, the manifest can be updated to include new segments, supporting real-time content delivery.

It is now referred to FIG. 1, which presents the architecture of the umbrella streaming system, illustrating the manner in which the system connects with a user's umbrella controller 101 to provide a seamless interactive video streaming experience. The system is designed to combine various video sources 104-1, 104-2, 104-3, 104-4, 104-5, and 104-6 into one cohesive stream that can be dynamically modified based on user interactions or automated triggers.

The user's umbrella controller 101 serves as a central component that manages user interactions and commands. The controller controls generation of the umbrella HLS/DASH stream 103, enabling users to manage various aspects of the video stream, such as switching between different live video sources 104-1, 104-2, and 104-3 or initiating specific actions like pairing (104-4) or content selection (VOD Source 1 104-5, VOD Source 2 104-6). This controller can be implemented as a remote control application, offering users a convenient interface to interact with the streaming content. In an alternate embodiment, the user can also control the content playback using buttons integrated directly into the video player. All user interactions are managed through a REST API. A REST API (Representational State Transfer Application Programming Interface) is a set of rules and conventions for building and interacting with web services. REST APIs are designed to take advantage of existing protocols, typically HTTP, and are often used to create web services that are lightweight, maintainable, and scalable.

The video player 102 serves as a general-purpose component that receives the umbrella HLS/DASH stream 103. This player handles the decoding and presentation of the video content to the user. Utilizing a general video player emphasizes the system's platform-independent nature, as there is no need for specialized software or hardware for operation, thus expanding its applicability across various devices and platforms.

The Umbrella HLS/DASH stream 103 comprises the video segments which are decoded and presented to the user by the video player 102. In the example of FIG. 1, the umbrella stream 103 merely corresponds to the Live Source 1 104-1, which is the active source for the user. However, depending on user's requests or on automated triggers, the user's umbrella controller 101 may control generation of an altered umbrella stream 103, through generation of HLS or DASH manifests on-the-fly, such that each request for a video segment can seamlessly redirect to different content streams, without interrupting the playback experience.

This can happen in response to a viewer's request (e.g., choosing a different camera feed) or automatically based on logic such as personalized recommendations, ad targeting criteria, or subscription status checks. Indeed, the interactivity may be predefined. For instance, content might be set to play for a limited duration, with payment required to continue consumption.

The system incorporates multiple video sources, including video source 1 104-1, video source 2 104-2, and video source 3 104-3, which provide live content for the streaming session. These sources can represent different camera angles, commentary tracks, or other live feeds, offering users a rich and varied viewing experience.

As will be described in greater detail below in relation with FIG. 3 and FIG. 4, the pairing source 104-4 is used to facilitate the pairing process between the user's device and the streaming session. This source can display a looping animation or QR code to guide users through the pairing process, ensuring secure and efficient authentication and activation of the streaming session.

Additionally, the system includes VOD source 1 104-5 and VOD source 2 104-6, which provide on-demand content that can be integrated into the live stream. These sources enable users to access a library of pre-recorded content, allowing for seamless transitions between live and on-demand viewing experiences.

Overall, the umbrella streaming system depicted in FIG. 1 offers a flexible and interactive solution for video streaming, leveraging a combination of live and on-demand content sources, such as video sources 104-1, 104-2, 104-3, 104-4, 104-5, and 104-6, to deliver a personalized and engaging user experience.

According to an example embodiment, to ensure a near real-time experience, the system uses very short video segments (approximately 2 seconds) and minimizes buffering. This is achieved through careful control of DASH or HLS manifests.

Furthermore, to allow rendering of the video segments across all streaming protocols, a specialized encoding setup is used, which involves synchronizing the length of audio and video tracks within each segment. Additionally, all video inputs are preferentially encoded using identical profiles to guarantee seamless transitions between streams.

Table 1 below shows the recommended encoding parameters for the video segments according to this example embodiment.

**[Table 1]**

| | 25 FPS | 50 FPS | 30 FPS | 60 FPS |
|---|---|---|---|---|
| Audio Sample Rate | 48000 | 48000 | 48000 | 48000 |
| Segment Duration | 3.84 / 1,92 | 1,92 | 3,2 / 1,6 | 1,6 |
| Segment GOP | 96 | 96 | 96 | 96 |

Table 1 lists different frame rates, including 25 FPS, 50 FPS, 30 FPS, and 60 FPS. These frame rates are selected to accommodate various content types and viewing preferences, ensuring adequate playback quality. The recommended segment lengths to achieve the desired smoothness are as follows:

The audio sample rate may be consistently set at 48,000 Hz across all frame rates. This standardization ensures high-quality audio playback and synchronization with video tracks.

The segment duration is specified for each frame rate, with values such as 3.84 or 1.92 seconds for 25 FPS, 1.92 seconds for 50 FPS, 3.2 or 1.6 seconds for 30 FPS, and 1.6 seconds for 60 FPS. These durations are chosen to balance low-latency streaming with quality and performance, facilitating quick adaptation to network conditions and user interactions. Such segment durations correspond to cases when audio and video frequencies are aligned, which may occur several times: for example, for 25 FPS, audio and video tracks meet in 1.92 s and also in 3.84 s. In a preferred embodiment, segments of approximately 2 seconds are chosen to balance performance and responsiveness.

The GOP (Group of Pictures) size may be set at 96 for all frame rates. This parameter determines the frequency of keyframes within the video stream, impacting compression efficiency and the ability to switch between segments seamlessly.

Table 1 emphasizes the importance of consistent encoding profiles, including codec settings, resolution, and bitrate parameters, to ensure seamless transitions between video segments. By adhering to these recommended parameters, the umbrella streaming system can deliver a high-quality, low-latency viewing experience, enhancing user satisfaction and engagement.

When these conditions are not met, playback may become unstable, resulting in interruptions or crashes during source switching.

According to another embodiment, an alternative solution is to use marked discontinuities in the stream; however, support for this approach varies across video players and may not be as reliable.

FIG. 2 illustrates the session generation process within the umbrella streaming system, emphasizing the interaction between its components to establish a unique streaming session for each user. This process is designed to deliver a personalized and seamless video streaming experience.

To ensure the solution works seamlessly across various platforms without requiring integration, a single URL is provided for the stream. Since this URL is the same for all users, it is important to create a unique session for each incoming user. An interesting approach is to perform a redirect, generating a unique URL for the session, as shown on FIG. 2.

The process begins at step S1 (Request to Manifest ) with the video player 102 sending a request for a manifest file to the CDN (Content Delivery Network) Edge On-the-Fly Stream Generator 201. This request includes details such as the channel ID and parameters like from and to, which determine whether the stream should play live or at a past point in time.

Upon receiving the manifest request, the CDN Edge On-the-Fly Stream Generator 201 generates a unique URL for the user's session in step S2. This URL is used to redirect the video player to the user's specific session stream. To ensure continuity, a persistent cookie with the session identifier may be set on the user's device, allowing for seamless session maintenance during future visits. This eliminates the need for the user to pair with the stream again, improving convenience and continuity.

The User Umbrella Stream Management 101 module manages the user's session video stream 103. It processes requests to alter the video stream based on user commands or automated triggers, thereby ensuring a personalized and interactive experience. This component dynamically generates a manifest file that outlines the available video segments from various sources (104-1, 104-2, 104-3).

The user's session stream is decoded and rendered by the video player 102 in step S3.

However, when a user starts streaming a channel, there may be a need to introduce interactivity or enforce subscription paid access. To achieve this, the public stream may be closed after a certain period, and the user may be prompted to pair their device to access the streaming content.

FIG. 3 illustrates the process by which users are prompted to pair their device to access the streaming content. Initially, the system displays an intro animation for the QR code (301), which serves as a visual cue to engage the user. This is followed by the presentation of unique QR code video segments (302), which are dynamically generated for each user session. The QR code (306) is prominently displayed on the pairing screen (305), allowing users to easily scan it with their device. This animation loops until the user completes the pairing process on their end. This process is designed to be user-friendly and secure, ensuring that only the intended user can access the stream. Once the QR code is scanned, the outro animation for the QR code (303) is shown, signaling the completion of the pairing process. The user's umbrella controller (101) then manages the transition to the open umbrella stream (304), granting the user full access to the interactive video content.

The pairing process is described in greater detail in relation to FIG.4, which illustrates the detailed process of pairing a user's device to access the streaming content, emphasizing the role of the remote controller application in facilitating this interaction. The figure outlines the steps involved in securely linking a user's session with their device, ensuring a seamless and personalized streaming experience.

The process begins at step 411 with the video player 102 receiving the user's session stream from the CDN Edge On-the-Fly Umbrella Stream (103). This stream is initially set to a public mode, which may require pairing for full access.

The system generates a unique QR code for the user's session, which is temporarily assigned at step 412 to the user session 404. This code is part of the generated QR codes video segments (401) used in the pairing process.

Indeed, to ensure scalability for a large global user base, a large set of QR codes may be pre-generated. Tens of thousands of QR codes can be created in advance, with the total number determining the maximum concurrent pairing capacity at any given time. When a user initiates the pairing process, a QR code is temporarily assigned to their session at step 412.

At step 413 (Switch umbrella streaming to QR Code Loop), the User Umbrella Stream Controller switches the streaming content of the CDN Edge On-the-Fly Umbrella Stream 103 to display a looping QR code animation 303. This visual prompt encourages the user to initiate the pairing process.

At step 414, the user may then scan the QR code 306 displayed on the pairing screen using their device. The user may also manually enter the URL shown on the pairing screen 305. The QR code offers an advantage by embedding a unique code, eliminating the need for manual input.

This action triggers the remote controller application (402), which interface is loaded on the user's device. This can be delivered as a mobile web application (i.e. a web-based application that is accessed through a mobile device's web browser, and is typically built using standard web technologies, and designed to be responsive, adapting to different screen sizes and orientations), a native app (a software application developed specifically for a particular platform or operating system, typically downloaded and installed from an app store) or an app clip (a small, lightweight version of a full app that can be launched quickly without requiring the user to download and install the entire app. App clips are designed to provide a specific functionality or service, such as making a purchase or accessing a feature, and are often triggered by scanning a QR code, tapping an NFC tag, or clicking a link), depending on the platform. Through this interface 402, the user can either sign in (e.g. if they have a previous account) or directly purchase content.

Indeed, the Remote Controller Application 402 facilitates user interactions such as login, registration, and purchasing options (e.g., pay-per-view, subscription). It sends the scanned QR code along with the user's ID (415) to the system, linking the user's device with their session.

Upon receiving the QR code and user ID, the system assigns (416) the user ID to the session, effectively pairing the user's device with the streaming session. Hence, the user session 404 is closely associated with the user object 403, i.e. the data structure or entity that represents the user within the system, and contains information and attributes related to the user such as a user ID or username, authentication data or user-specific settings and preferences, such as language, content preferences, and interaction history.

The user object 403 is involved in managing the user's session and interactions with the streaming service, ensuring that the user receives a personalized and secure experience. The system may indeed remember user interactions, preferences, and viewing history to tailor future streams.

At this point (416), a final animation may be played, signaling that the stream is about to start.

Once the pairing is complete and the stream begins, the QR code is released (417) and made available for other users, optimizing resource usage and ensuring scalability.

The paired user can now control (418) the streaming session using their user ID in real-time, accessing personalized content and interactive features through the remote controller application 402.

The remote controller 402 plays an important role in the pairing process and enables users to interact with the stream in various ways.

Users can access the remote controller application by scanning a QR code, which contains the pairing PIN, or by manually entering the URL and PIN displayed on the pairing page.

Additionally, users will authenticate with the umbrella streaming services through the remote controller app 402. This links the streaming session to the user's account, allowing the system to identify the user and provide personalized streaming experiences.

In addition, the remote controller app 402 maintains a persistent session, so that users only need to scan the QR code again to re-pair automatically, without any further authentication required, in case the stream becomes unpaired.

The remote controller application 402 offers multiple interactive features, detailed below.

First, the user may use the remote controller application 402 to create an account, or to sign in to an existing account.

The remote controller application 402 may also be used to purchase content via pay-per-view or subscription; indeed, and as illustrated in relation to FIG. 3 above, broadcasters may lock or restrict content at any point in the stream. Once locked, users are prompted to pair the stream with the interactive remote controller 402-available as a mobile or web application. The moment the user logs in or completes a purchase, the video stream resumes instantly. This mechanism supports various payment models, including pay-per-view, subscription, or single purchases of premium content, ensuring monetization can adapt to the broadcaster's or content owner's needs.

The remote controller application 402 also offers the user the possibility to switch content, or more generally to interact with and alter the streaming content in real-time. For a sporting event, users can switch between alternate camera views or different commentary tracks at will. During live events, especially sports, fans often want to replay key moments. The system then sends a highlight reel directly to the viewer's remote controller application 402 letting them watch replays without leaving the live broadcast environment. Once the highlight is done, the user automatically rejoins the live feed, keeping them fully engaged while preserving the continuity of the main event.

The remote controller application 402 may allow the user to select VOD content to play on the channel or stream. In an example scenario integrating a VOD library into a linear channel, the user can seamlessly transition from one piece of content to another without leaving the stream.

The remote controller application 402 may also allow the user to participate in quizzes, polls, and other interactive events. Indeed, polls, quizzes, and other interactive elements can be embedded into the stream. Viewers may see the questions as part of the ongoing broadcast and can respond using their linked remote controllers 402. Results are reflected in near-real-time on the screen, adding a layer of immersion typically missing from standard linear television. This interactive dynamic keeps audiences invested and can significantly boost viewer loyalty.

The remote controller application 402 may also allow the user to purchase items featured in the stream. One-click purchasing enables broadcasters to convert viewer interest into immediate sales. Whether offering discounted merchandise at a pivotal game moment or showcasing special behind-the-scenes content, the user can confirm a purchase with a single click if their payment details are already stored. This eliminates friction, seizing upon the excitement of live events or critical story arcs to maximize sales opportunities.

An additional feature of the remote controller application 402 lies in the possibility of interacting with in-stream advertisements; indeed, the system is capable of injecting advertisements into the live stream with pinpoint accuracy. Through on-the-fly manipulation of the video segments, each user can receive individualized ads, which can be tracked and measured using standard ad measurement protocols. This opens up highly targeted advertising opportunities, allowing brands to deliver specialized messages to the right audiences at exactly the right time, without relying on external integrations.

This disclosure is not limited to the features of the remote controller application described above, which are only examples. It encompasses every alternative that a person skilled in the art would envisage when reading this text.

### Industrial Applicability

The technical solutions presented here can be used to reimagine the concept of live television by merging interactive features, dynamic monetization, and content personalization into a single, streamlined broadcast. Rather than forcing content owners to build specialized apps for multiple operating systems and device types, all of the intelligence is embedded into the video feed itself. This strategy removes significant technical barriers and accelerates the path from concept to viewer-ready experiences, all while opening up groundbreaking monetization possibilities.

By incorporating advanced capabilities-such as detailed advertisement targeting, real-time polls, highlight replays, and frictionless one-click purchases-the system delivers a user experience that feels both innovative and intuitive. This technological leap forward not only appeals to viewers but also provides a powerful toolset for broadcasters seeking to stand out in a highly competitive market.

Lastly, the entire system is designed to operate globally, reducing the costs of integration and TV channel distribution while enhancing monetization opportunities through both paid content and advertisement-based models.

## Claims

1. Method for interactive video streaming comprising:
a. receiving a request from a video player for a video stream encoded according to an HTTP-based adaptive bitrate streaming protocol;
b. redirecting the request to a stream generator to create a unique streaming session for a user by generating a unique URL for said user's streaming session;
c. providing the user's session video stream;
d. receiving a request for altering the user's session video stream;
e. altering said user's session video stream based on the received request, by generating on-the-fly a manifest file comprising altered stream segments chosen among a plurality of input sources;
f. providing an altered user's session video stream based on the generated manifest file.

2. The method of the preceding claim, wherein said altered user's session video stream is provided as a live video stream.

3. The method of the preceding claim, wherein said request for altering the user's session video stream is generated by a remote controller application in response to a user command belonging to the group comprising:
- a command for switching an angle of view of said user's session video stream;
- a command for viewing a replay of said user's session video stream;
- a command for switching an audio or video content of said user's session video stream;
- a command for making a purchase;
- a command for user interaction with said user's session video stream.

4. The method of any preceding claim, wherein said request for altering the user's session video stream is automatically generated by a remote controller application based on at least one criterion belonging to the group comprising:
- a personalization criterion based on a recommendation algorithm for said user;
- an ad targeting criterion for said user;
- a criterion for generating interaction with the user;
- a subscription status check for said user;
- a duration criterion;
- a content event criterion.

5. The method of any preceding claim, wherein providing an altered user's session video stream comprises providing a looping content for initiating a pairing process with a user's device.

6. The method of claim 5, wherein said pairing process comprises:
a. temporarily assigning a pairing identifier to said user's streaming session and displaying said pairing identifier on a pairing screen;
b. receiving the assigned pairing identifier from said user's device;
c. loading a remote control interface on said user's device and authenticating said user through said remote control interface based on a user identifier;
d. activating the user's streaming session using said pairing identifier and said user identifier;
e. releasing the pairing identifier assigned to the user's streaming session.

7. The method of claim 6, wherein said pairing identifier is embedded in a QR code temporarily assigned to said user's streaming session and wherein said user's device scans said QR code displayed on the pairing screen.

8. The method of any preceding claim, wherein generating on-the-fly said manifest file comprises synchronizing audio and video tracks issued from said plurality of input sources within each segment to ensure audio and video segment alignment.

9. The method of claim 8, wherein said segments in said manifest file have a short segment duration, preferentially of around two seconds.

10. The method of claim 8 or 9, wherein said segments in said manifest file are extracted from input sources encoded using identical encoding setups, comprising codec settings, resolution and bitrate parameters.

11. Computer software comprising instructions to implement at least a part of a method according to one of claims 1 to 10 when the software is executed by a processor.

12. Computer-readable non-transient recording medium on which a software is registered to implement a method according to one of claims 1 to 10 when the software is executed by a processor.

13. A system for interactive video streaming, comprising:
a. a video player configured to request a manifest for a video stream encoded according to an HTTP-based adaptive bitrate streaming protocol;
b. a Content Delivery Network, CDN, edge on-the-fly stream generator configured to create a unique streaming session for a user by redirecting the manifest request to a unique URL generated for the user's session;
c. a user umbrella stream management module configured to manage the user's session video stream and alter the stream based on received requests, by generating on-the-fly a manifest file comprising altered stream segments;
d. a plurality of input sources configured to provide content for the user's session video stream.

14. The system of claim 13, wherein it further comprises processing means configured for implementing the method for interactive video streaming according to any of claims 1 to 10.
